# EUROPÄISCHE PATENTANMELDUNG

(11) **EP 1 739 376 A1**
(43) Veröffentlichungstag der Anmeldung: **03.01.2007**
(21) Anmeldenummer: 06021371.7
(22) Anmeldetag: 01.03.2004
(51) Int. Cl.: F28D 20/02

(54) **PCM-Element**

(30) Priorität: 04.03.2003 DE 20303514 U; 09.07.2003 DE 20310593 U
(62) Teilanmeldung aus: 04004624.5
(71) Anmelder: Imtech Deutschland GmbH & Co. KG, 22047 Hamburg (DE)
(72) Erfinder: Boiting, Bernd, Dr.-Ing., 48565 Steinfurt (DE); Detzer, Rüdiger, Prof. Dr.-Ing., 35418 Buseck (DE)
(74) Vertreter: Richter, Werdermann, Gerbaulet & Hofmann

(57) **Zusammenfassung**

Um ein Bauelement für eine Kühlfläche auf Basis von PCM anzugeben, welches kostengünstig herstellbar ist und einen hohen Wirkungsgrad aufweist, sowie eine kostengünstige Halterung für das Bauelement bereitzustellen, mit der eine sichere Befestigung erzielbar ist, wird ein PCM-Element (10) zur latenten Wärmespeicherung vorgeschlagen, bei dem das PCM-Element (10) als Modul aufgebaut ist und parallel und in Reihe angeordnet und mit mindestens einem weiteren PCM-Element kombinierbar ist und Phasenwechselmaterial (14) (Phase Change Material) innerhalb einer Umhüllung (12) angeordnet ist.

## Beschreibung

Die vorliegende Erfindung betrifft ein PCM-Element zur latenten Wärmespeicherung.

Als Speichermedien bekannt sind zum Beispiel Wasser oder Steine/Beton, um fühlbare ("sensible") Wärme zu speichern, oder Phasenwechselmaterialien (Phase Change Materials, PCM) wie Salze, Salzhydrate oder deren Gemische oder organische Verbindungen (zum Beispiel Paraffin), um Wärme in Form von Schmelzwärme ("latenter" Wärme) zu speichern. Es ist bekannt, dass beim Schmelzen einer Substanz, das heißt beim Übergang von der festen in die flüssige Phase, Wärme verbraucht, das heißt aufgenommen wird, die, solange der flüssige Zustand bestehen bleibt, latent gespeichert wird und dass diese latente Wärme beim Erstarren, das heißt beim Übergang von der flüssigen in die feste Phase, wieder frei wird. Grundsätzlich ist für das Laden eines Wärmespeichers eine höhere Temperatur erforderlich als beim Entladen erhalten werden kann, da für den Transport/Fluss von Wärme eine Temperaturdifferenz erforderlich ist. Die Qualität der Wärme ist dabei von der Temperatur, bei der sie wieder zur Verfügung steht, abhängig: Je höher die Temperatur ist, desto besser kann die Wärme abgeführt werden. Aus diesem Grund ist es erstrebenswert, dass das Temperaturniveau bei der Speicherung so wenig wie möglich absinkt. Bei sensibler Wärmespeicherung (zum Beispiel durch Erhitzen von Wasser) ist mit dem Eintrag von Wärme eine stetige Erhitzung des Speichermaterials verbunden (und umgekehrt beim Entladen), während latente Wärme bei der Schmelztemperatur des PCM gespeichert und entladen wird. Latente Wärmespeicherung hat daher gegenüber sensibler Wärmespeicherung den Vorteil, dass sich der Temperaturverlust auf den Verlust beim Wärmetransport von und zum Speicher beschränkt.

Wärmespeicher finden vor allem in Kühlvorrichtungen Anwendung, da sie Wärme aus ihrer Umgebung aufnehmen und abführen können. Um auf Phasenwechselmaterialien (PCM) basierende Wärmespeicher für eine Kühlung von geschlossenen Räumen zu verwenden, ist es bekannt, innerhalb des geschlossenen Raumes oder innerhalb der den Raum umgebenden Wand Kühlflächen anzubringen, die aus einem geeigneten PCM bestehen. Um eine Nachrüstbarkeit der auf PCM basierenden Kühltechnik zu realisieren, ist es vorteilhaft, die Kühlflächen innerhalb von Zwischenwänden oder abgehangenen Decken anzuordnen. Dabei werden entsprechend den kapazitiven Anforderungen und den räumlichen Gegebenheiten unterschiedlichste geometrische Ausführungen der Kühlflächen notwendig.

Hierbei ist es insbesondere problematisch, dass die den geometrischen und kapazitiven Gegebenheiten anzupassenden Kühlflächen äußerst bauaufwendig sind.

Es ist daher Aufgabe der vorliegenden Erfindung, ein Bauelement für eine Kühlfläche auf Basis von PCM anzugeben, welches kostengünstig herstellbar ist und einen hohen Wirkungsgrad aufweist, sowie eine kostengünstige Halterung für das Bauelement bereitzustellen, mit der eine sichere Befestigung erzielbar ist.

Die Aufgabe wird erfindungsgemäß durch ein PCM-Element mit den im Anspruch 1 angegebenen Merkmalen gelöst. In den abhängigen Ansprüchen 2 bis 19 sind bevorzugte Weiterbildungen des erfindungsgemäßen PCM-Elementes angegeben.

Ein besonderer Vorteil des erfindungsgemäßen PCM-Elementes ist sein hoher Wirkungsgrad, seine einfache geometrische Grundform und sein modulartiger Aufbau. Dadurch, dass Phasenwechselmaterial innerhalb einer, insbesondere zylinderförmigen, Umhüllung angeordnet ist, kann ein optimaler Wärmeübergang mit der Umgebung des PCM-Elementes bei einer sehr einfachen geometrischen Form realisiert werden. Das PCM-Element ist dabei als Modul aufgebaut und parallel und in Reihe angeordnet mit mindestens einem weiteren PCM-Element kombinierbar. Im Rahmen der Erfindung kann auch eine ggf. leicht anpassbare Umhüllung in Form einer Folie gewählt werden. Die Einbringung von PCM in eine Folie und die anschließende Evakuierung führt zu einem sehr guten Wärmeübergang zwischen der Folie als Umhüllung und dem PCM und schafft andererseits ein optimal handhabbares PCM-Element. Dabei kann vorteilhafterweise vorgesehen werden, eine mehrschichtige Folie zu verwenden. Diese kann erfindungsgemäß eine hochelastische (Zwischen-)Schicht aufweisen, die ein Auslaufen oder Austreten des PCM bei Verformung und/oder Beschädigung sicher verhindert, während die ein- oder beidseitige Deckschicht aus einem flammfesten oder nicht-brennbaren Material besteht, um die Brandsicherheit zu erhöhen.

Eine weitere erfindungsgemäße Ausgestaltung des PCM-Elements besteht darin, dass die feste, z. b. zylinderförmige Umhüllung mindestens zweischichtig und bevorzugterweise mehrschichtig aufgebaut ist, um durch eine (Zwischen-)Schicht aus einem hochelastischen Material einen Austrittsschutz bzw. Auslaufschutz zu realisieren, während die ein- oder mehrschichtige Deckschicht aus einem flammfesten oder nicht-brennbaren Material besteht, um die Brandsicherheit des PCM-Elements zu erhöhen.

Ein erfindungsgemäßes PCM-Element kann als Standardmodul derart verwendet werden, dass aus diesem Standardmodul alle benötigten Formen durch Komposition von PCM-Elementen unterschiedlichster Baugröße erstellt werden. Zur Erhöhung des Wirkungsgrades des erfindungsgemäßen PCM-Elementes ist in einer bevorzugten Ausführungsvariante innerhalb der Umfüllung ein Geflecht und/oder ein Profil aus wärmeleitendem Material angeordnet. Dabei ist das wärmeleitende Profil vorzugsweise ein Aluminium-Strangpressprofil und das wärmeleitende Geflecht vorzugsweise ein homogenes innerhalb der Umhüllung angeordnetes Metallgeflecht. Hierdurch wird dem Problem, dass beim Schmelzen des PCM (durch Wärmeaufnahme aus der Umgebung) die geschmolzene Phase einen schlechten Wärmeübergang hat, entgegengewirkt, da die Wärme innerhalb des PCM-Elementes in geeigneter, effizienter Weise durch das Metallgeflecht beziehungsweise das Aluminium-Strangpressprofil nach innen transportiert wird. Die Geometrie des Geflechts beziehungsweise des Profils ist derart ausgestaltet, dass der Wärmetransport von der Zylinderoberfläche zur Mitte optimiert ist.

Insbesondere zur Kühlung von geschlossenen Räumen kommen als Phasenwechselmaterialien Salze, Salzhydrate, Gemische aus Salzen und/oder Salzhydraten und/oder organische Materialien in Betracht. Das organische Material ist vorzugsweise Paraffin.

Eine weitere Möglichkeit zur Erhöhung des Wirkungsgrades eines erfindungsgemäßen PCM-Elementes besteht darin, dass innerhalb des PCM-Elementes erfindungsgemäß ein Rohr angeordnet ist. Vorzugsweise ist die Längsachse des PCM-Elementes mit der Längsachse des Rohres identisch. Dem Rohr können entsprechend der jeweiligen Anwendung unterschiedliche Funktionen zukommen. Bei Aufnahme von Wärme in das PCM-Modul über die Außenoberfläche kann nach entsprechender Erwärmung, das heißt beispielsweise nach vollständiger Verflüssigung des PCM, eine Kühlung des Moduls von innen mittels Durchströmung einer Kühlflüssigkeit oder eines kühlenden Gases erfolgen. Andererseits ist es auch möglich, dass eine Flüssigkeit, die beispielsweise für einen Wärmetauscher zur Kühlung von Raumluft vorgesehen ist, durch das Rohr im PCM-Modul geführt wird, um dort gekühlt zu werden. In diesem Fall wird dann alternativ oder ergänzend die spätere Kühlung des erwärmten PCM durch Abstrahlung von Wärme über die Zylinderoberfläche außen und/oder durch Durchspülung des innerhalb des PCM angeordneten Rohres mit einer Kühlflüssigkeit und/oder einem Kühlgas bewirkt.

Zur Realisierung unterschiedlicher Bauformen und Baugrößen ist es erfindungsgemäß vorgesehen, dass mehrere, im Wesentlichen zylinderförmige Umhüllungen parallel und/oder in Reihe, insbesondere in Form eines Rohrregisters angeordnet werden, innerhalb derer Phasenwechselmaterial angeordnet ist. Vorzugsweise sind diese Umhüllungen in regelmäßigen Abständen, parallel zueinander, innerhalb eines Gehäuses angeordnet. Um eine Zufuhr beziehungsweise Abfuhr von Wärme in beziehungsweise aus jedem PCM-Element bewirken zu können, kann vorteilhafterweise vorgesehen sein, dass das Gehäuse mit einem Wärmetauscher verbunden ist und/oder eine Lufteintrittsöffnung sowie eine Luftaustrittsöffnung aufweist.

In einer weiteren Ausgestaltung der Erfindung weist das PCM-Element die Form eines Quaders auf. Hierbei kann das PCM-Element mit einer Bohrung ausgebildet sein, in der eine ein Fluid führende Übertragungseinheit einführbar ist. Durch dieses plattenförmige PCM-Element wird eine größere Wärmeübertragungsfläche erreicht, wodurch sich der Wirkungsgrad erheblich verbessern lässt. Es bietet sich an mehrere PCM-Platten in Reihe an der Übertragungseinheit anzuordnen, so dass eine kompakte und effiziente Wärmeübertragungseinheit entsteht. Während des Betriebes strömt beispielsweise zu kühlende Luft über die Wärmeübertragungsfläche, wobei ein Wärmestrom in Richtung des Temperaturgefälles entsteht. Das bedeutet, dass das PCM-Element über die Außenoberfläche Wärme aufnimmt und diese speichert. Zur Abführung dieser Wärme dient das Fluid, das eine Kühlflüssigkeit oder ein kühlendes Gas sein kann, welches die im PCM-Element gespeicherte Wärme aufnimmt und an einen anderen Ort transportiert.

Die Übertragungseinheit kann aus Metall oder aus Kunststoff besteht. Um eine gute Wärmeleitung zu erzielen kann die Übertragungseinheit aus Aluminium, Stahl, Messing oder Kupfer bestehen. Es ist ebenfalls denkbar, die Übertragungseinheit aus beispielsweise Polyethylen oder aus Fluorkunststoff herzustellen. Bei einer aus Kunststoff bestehenden Übertragungseinheit könnte das Gewicht wesentlich reduziert werden, was in bestimmten Anwendungsfällen von einem wesentlichen Vorteil wäre. Ein weiterer Vorteil von Kunststoff-Übertragungseinheiten ist, dass bei einem eventuellen Anfall an Kondensat die Übertragungseinheit durch Korrosion nicht beschädigt werden könnte. Der Einsatzbereich einer Polyethylen-Übertragungseinheit liegt bei Temperaturen bis zu ca. 60°C. Übertragungseinheiten aus Fluorkunststoff können hingegen bis ca. 180°C eingesetzt werden.

Weiterhin kann vorteilhaft vorgesehen sein, dass die Übertragungseinheit eine Querschnittsfläche aufweist, die kreisförmig ist. Es ist ebenfalls möglich, dass die Übertragungseinheit eine elliptische Querschnittsfläche aufweist oder die Übertragungseinheit als Flachrohr ausgestaltet ist. Es hat sich gezeigt, dass die beiden letztgenannten ein günstiges Strömungsverhalten haben, insbesondere bei höheren Strömungsgeschwindigkeiten der Luft, die entlang der PCM-Elemente sowie der Übertragungseinheit strömt.

Zur Erhöhung des Wirkungsgrades weist das PCM-Element eine Abdeckung auf, die aus einem wärmeleitenden Material besteht. Diese Abdeckung ist auf der Außenfläche des PCM-Elementes beziehungsweise auf der Umhüllung angeordnet, wobei die Abdeckung beispielsweise eine Platte sein kann, die aus einem gut wärmeleitenden Material - wie beispielsweise Aluminium - bestehen kann.

Vorzugsweise ist die Übertragungseinheit als Rohr ausgebildet, das mit dem PCM-Element im Presssitz verbunden ist, wodurch eine zuverlässige mechanische und wärmeleitende Verbindung erreicht wird. Dieser Presssitz kann beispielsweise durch ein Keilprofil bewirkt werden, das beispielsweise an der Bohrung des PCM-Elements und/oder an der Mantelfläche des Rohres angeordnet ist. Um das Rohr mit dem PCM-Element zu verbinden, kann das Rohr durch die Bohrung des PCM-Elementes geschoben werden. Anschließend wird das Rohr um seine Längsachse gedreht, wodurch sich der Abstand zwischen der Mantelfläche des Rohres und der Bohrungskontur des PCM-Elementes vermindert bis die Flächen einander liegen. Beim weiteren Verdrehen des Rohres werden die Keilprofile elastisch verformt, wodurch sich das Rohr und das PCM-Element selbsthemmend verklemmen, so dass eine feste Verbindung zwischen diesen Teilen erreichbar ist. Der Winkel, über den dieses Verdrehen erfolgt, hängt von dem Abstand zwischen der Mantelfläche des Rohres und der Bohrungskontur des PCM-Elementes, von der Elastizität des Materials, aus dem insbesondere die Keilprofile bestehen, von der Steigung der Keilprofile, dem Umfang des Rohres sowie anderen Parametern ab. Sind mehrere PCM-Platten in Reihe auf dem Rohr angeordnet, bildet diese Einheit eine Art Rippenrohr.

Die oben genannte Aufgabe wird ferner durch eine PCM-Halterung für ein PCM-Element mit den in Anspruch 20 gekennzeichneten Merkmalen gelöst.

Erfindungsgemäß weist die PCM-Halterung einen Kanal, in denen ein Fluid führbar ist, und mindestens eine Aufnahmevorrichtung auf, in die das PCM-Element zumindest zum Teil einführbar ist. Bei dem Kanal kann es sich sowohl um einen geschlossenen oder auch einseitig offenen Kanal handeln. Die Aufnahmevorrichtung kann beispielsweise derart ausgebildet sein, dass das PCM-Element in diese eingeschoben werden kann. Die PCM-Halterung kann mit mehreren Aufnahmevorrichtungen ausgebildet sein, die in einem gleichen Abstand zueinander positioniert sein können. In diese Aufnahmevorrichtungen sind die PCM-Elemente einführbar und befestigbar, so dass eine Einheit entsteht mit mehreren übereinander oder nebeneinander liegenden PCM-Elementen, die vorzugsweise mit ihren Seiten- oder Endkanten in der Aufnahmevorrichtung eingespannt sind. Um einen sicheren Halt der PCM-Elemente zu gewährleisten können zwei PCM-Halterungen vorgesehen sein, die in einem Abstand zueinander liegen, wobei die Aufnahmevorrichtungen der beiden PCM-Halterungen zueinander gerichtet sind. Zwischen diesen beiden PCM-Halterungen können die PCM-Elemente angeordnet sein. Zur Abführung der in den PCM-Elementen gespeicherten Wärme dient der in der Halterung angeordnete Kanal. Im Falle eines geschlossenen Kanals kann durch diesen das Fluid - die Kühlflüssigkeit oder das kühlende Gas - strömen, das die Wärme direkt in der Halterung aufnehmen kann. Hierbei ergibt sich ein Wärmestrom von der in der Aufnahmevorrichtung angeordneten Seitenkante des PCM-Elementes durch eine Wandung des Kanals, die der Aufnahmevorrichtung zugewandt ist, in das Fluid. Durch eine derartige Integration einer Kühlvorrichtung (Kanal) in der PCM-Halterung wird eine kompakte und einfache Gesamtkonstruktion erzielt.

Erfindungsgemäß kann der Kanal eine Querschnittsfläche aufweist, die kreisförmig, ellipsenförmig, rechteckig oder u-förmig ausgebildet ist, wobei es sich bei dem u-förmigen Kanal um einen einseitig offenen Kanal handelt.

Vorteilhafterweise ist die PCM-Halterung als Strangpressprofil ausgebildet, das vorzugsweise aus Aluminium besteht. Da Aluminium gute Wärmeleiteigenschaften aufweist, kann mit der erfindungsgemäßen PCM-Halterung ein hoher Wirkungsgrad hinsichtlich der Wärmeübertragung erreicht werden. Ferner ist eine derartige PCM-Halterung aufgrund des Strangpressverfahrens kostengünstig herzustellen.

Zur Verbesserung des Wirkungsgrades kann die PCM-Halterung eine Wärmeleitpaste mit beispielsweise dauerelastischen Eigenschaften aufweisen, die zwischen dem PCM-Element und der Aufnahmevorrichtung beziehungsweise der Wandung des Kanals angeordnet ist. Die Wärmeleitpaste kann beispielsweise auf Silikonbasis beruhen oder aus Metallen beziehungsweise deren Oxiden bestehen. Die letztgenannten weisen den Vorteil auf, dass sie besser wärmeleitend sind als Silikonpasten.

Bei einer weiteren Alternative weist der Kanal ein Rohr oder einen Schlauch auf, die in einem direkten Kontakt mit dem PCM-Element stehen. Hierbei handelt es sich um einen offenen Kanal, der beispielsweise u-förmig ausgebildet sein kann. Der Schlauch, der zum Beispiel aus einem elastischen Kunststoff bestehen kann, liegt mit einem Teil seiner Mantelfläche an der u-förmigen Wandung des Kanals an. Mit einem anderen Teil der Mantelfläche kontaktiert der Schlauch unmittelbar das PCM-Element, der vorzugsweise an das PCM-Element elastisch herangedrückt ist, wodurch ein guter Wärmeübergang gewährleistet ist.

Die Erfindung wird nachfolgend in Ausführungsbeispielen anhand der zugehörigen Zeichnungen näher erläutert. Es zeigen:
- Figur 1: eine teilweise geschnittene, perspektivische Darstellung eines erfindungsgemäßen PCM-Elementes mit einem Metallgeflecht,
- Figur 2: eine teilweise geschnittene, perspektivische Darstellung eines erfindungsgemäßen PCM-Elementes mit einem Aluminium-Strangpressprofil,
- Figur 3: eine schematische Darstellung eines Kühlgerätes bestehend aus mehreren parallel zueinander angeordneten erfindungsgemäßen PCM-Elementen,
- Figur 4: eine schematische Darstellung von PCM-Elementen, die in Reihe auf einer rohrförmigen Übertragungseinheit angeordnet sind gemäß der Erfindung,
- Figur 5: eine schematische Darstellung von 3 PCM-Elementen, die in einer PCM-Halterung angeordnet sind gemäß der Erfindung, und
- Figur 6: eine weitere Alternative einer erfindungsgemäßen PCM-Halterung.

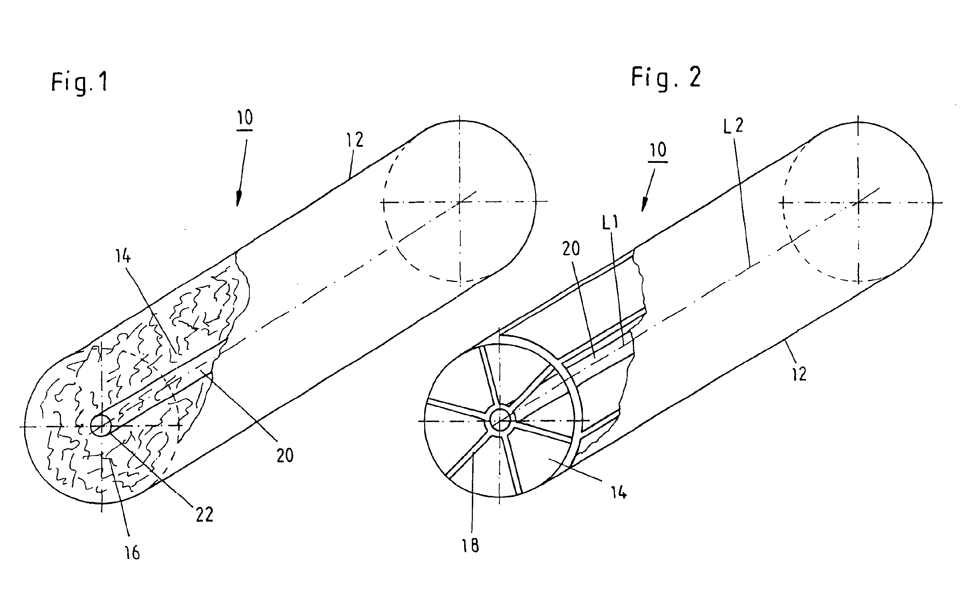

Figur 1 zeigt eine teilweise geschnittene, perspektivische Darstellung eines erfindungsgemäßen PCM-Elementes 10. Das PCM-Element 10 besteht aus einer Umhüllung 12, welche die äußere Form des PCM-Elementes 10 definiert. Es ist jedoch zur Anpassung an bauliche Gegebenheiten und/oder aus strömungstechnischen Gründen auch möglich, das PCM-Element mit einem ovalen oder polygonen Querschnitt zu gestalten. Erfindungsgemäß ist das PCM-Element 10 im Wesentlichen zylinderförmig ausgestaltet. Die zylindrische Oberfläche der Umhüllung 12 ermöglicht einen optimalen Wärmeübergang, wodurch das erfindungsgemäße PCM-Element 10 eine hohe Wärmemenge, aufnehmen und speichern kann. Innerhalb der Umhüllung 12 ist das Phasenwechselmaterial 14 angeordnet. Die Umhüllung 12 bildet dabei auch die Versiegelung oder Verkapselung des PCM-Elementes 10 aus, um einen Flüssigkeitsaustritt, der zu Substanzverlust beziehungsweise Verunreinigung der Umgebung führen würde, zu verhindern. Darüber hinaus ist innerhalb der Umhüllung 12 ein Metallgeflecht 16 angeordnet, wobei das Metall eine besonders hohe Wärmeleitfähigkeit besitzt. Hierdurch wird erfindungsgemäß erreicht, dass die über die zylindrische Oberfläche aufgenommene Wärmemenge möglichst effizient ins Innere des PCM-Elementes 10 geleitet wird. Dadurch wird insbesondere ein gleichmäßiges Aufschmelzen des Phasenwechselmaterials 14 und eine damit einhergehende gleichmäßige Volumenänderung vermieden. Außerdem wird eine bessere Wärmeaufnahme/-abgabe durch das PCM-Element 10 erreicht. Weiterhin besitzt das erfindungsgemäße PCM-Element 10 ein im Inneren geführtes Rohr 20. Über die Rohranschlüsse 22 kann das PCM-Element 10 von innen über eine Flüssigkeit oder ein Gas gekühlt werden. Das Rohr 20 wird dabei konzentrisch im PCM-Element 10 angeordnet, so daß die Längsachse L1 des Rohres 20 mit der Längsachse L2 der Umhüllung 12 des PCM-Elements 10 zusammenfällt.

Eine alternative Ausgestaltung des PCM-Elementes 10 ist in Figur 2 perspektivisch dargestellt. Im Gegensatz zum Metallgeflecht 16 weist das erfindungsgemäße PCM-Element 10 ein Aluminium-Strangpressprofil 18 auf. Dieses Aluminium-Strangpressprofil 18 übernimmt hierbei die Aufgabe, die über die Umhüllung 12 aufgenommene Wärmemenge möglichst schnell in das Innere des PCM-Elementes 10 zu transportieren. Die ins Innere geleitete Wärmemenge kann nun über ein Kühlgas oder über eine Kühlflüssigkeit, welche durch das Rohr 20 fließt, abgeführt werden.

Das erfindungsgemäße PCM-Element 10 kann in Geräten unterschiedlichster Bauformen angewendet werden. Dabei ist es besonders vorteilhaft, dass aufgrund der einfachen geometrischen Ausgestaltung eines erfindungsgemäßen PCM-Elementes 10 entsprechend Figur 1 und 2 die Komposition mehrerer Elemente zu einer gewünschten Bauform besonders kostengünstig herstellbar ist.

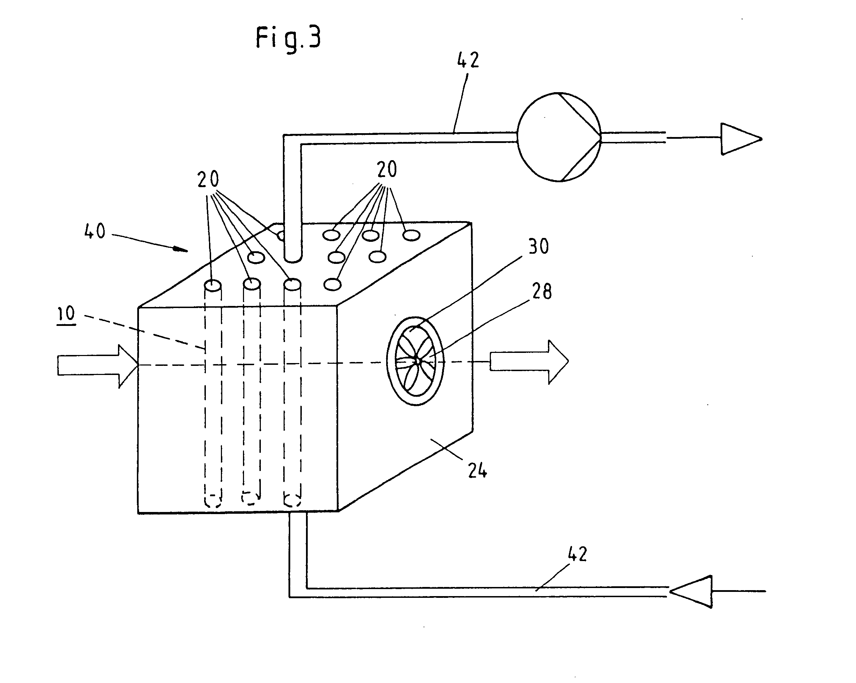

Figur 3 zeigt eine Vielzahl parallel zueinander angeordneter PCM-Elemente, welche das so genannte Rohrregister 40 ausbilden. Das Rohrregister 40 repräsentiert dabei die Gesamtheit der modulartig angeordneten Rohre 20. Weiterhin weist das Rohrregister 40 ein Gehäuse 24 auf, innerhalb dessen das Rohrregister 40 angeordnet ist. Dabei kann die Vielzahl der einzelnen, mit Phasenwechselmaterial 14 versehenen PCM-Elemente 10 wie folgt genutzt werden: Über eine (hier nicht dargestellte) Lufteintrittsöffnung 26 und die Luftaustrittsöffnung 28 sowie den Ventilator 30 kann die Raumluft gekühlt werden, indem diese an den einzelnen Umhüllungen 12 vorbeistreicht. Dabei nehmen die einzelnen, mit Phasenwechselmaterial 14 gefüllten PCM-Elemente 10 die Wärme der Raumluft auf und speichern diese. Zur externen Kühlung und damit zur Abführung der gespeicherten Wärmemenge kann das PCM-Element 10 beispielsweise von Außenluft, insbesondere Nachtluft, durchströmt werden. Es ist jedoch auch möglich, dass die einzelnen PCM-Elemente 10 mittels einer Kühlflüssigkeit oder eines Kühlgases, welche über die Anschlussleitung 42 zu- beziehungsweise abgeführt wird, gekühlt werden. Es ist aber auch möglich, über das Rohrregister 40 die zugeführte Kühlflüssigkeit oder das Kühlgas zu kühlen und über Nachtluft (siehe die durch Pfeile angedeutete Luftströmung) die PCM-Elemente 10 zu kühlen.

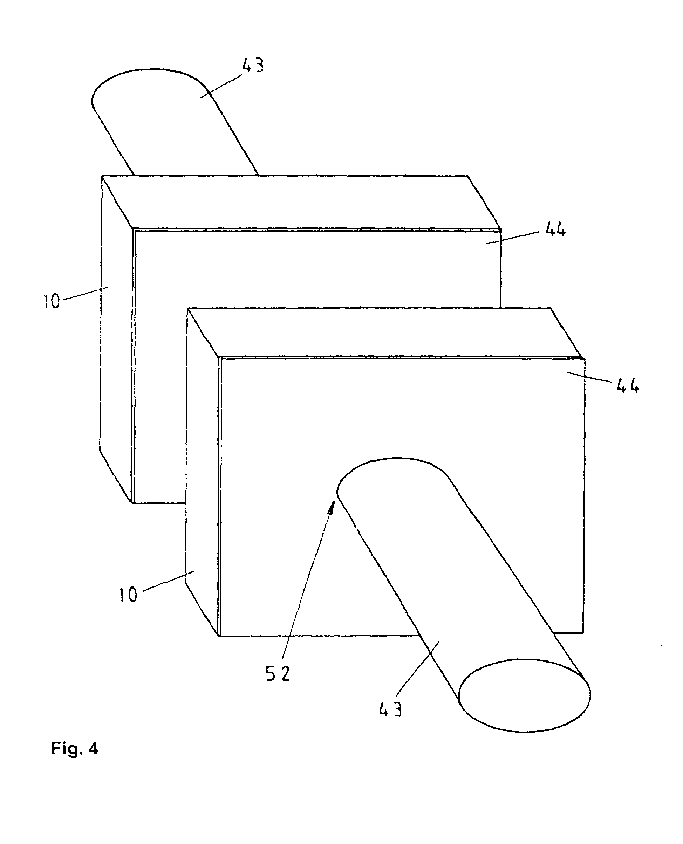

Figur 4 zeigt zwei PCM-Elemente 10 als Platten, die an einer Übertragungseinheit 43 angeordnet sind. Die Übertragungseinheit 43 ist ein Rohr, das ein Fluid führt. Die PCM-Platten 10, die jeweils mit einer Bohrung 52 ausgebildet sind, sind in einem Abstand zueinander in Reihe auf dem Rohr 43 angeordnet. Um eine bessere Wärmeleitung zu erzielen, sind an den Platten 10 Abdeckungen 44 befestigt, die aus einem Aluminiumblech bestehen. Die Platten 10 sitzen im Presssitz auf den Rohren 43, wobei eine Distanzierung der einzelnen Platten 10 durch beispielsweise Distanzringe erreicht werden kann, die auf das Rohr 43 aufgeschoben werden, was jedoch exemplarisch nicht in den Figuren dargestellt ist. Die Luft strömt bei dieser Anordnung entlang der Platten 10 sowie der Mantelfläche des Rohres 43 und gibt gleichzeitig Wärme ab. Die in den PCM-Platten 10 gespeicherte Wärme wird an das im Rohr 43 strömende Fluid abgegeben, wodurch eine Kühlung der über die PCM-Platten 10 strömenden Luft erreicht wird. Das Rohr 43 mit den PCM-Platten 10 kann so ausgebildet sein, dass die Strömungsrichtung der Luft quer zu dem Rohr 43 verläuft. Es ist jedoch ebenfalls denkbar, dass die Luft längs zu dem Rohr 43 strömt. Ferner ist die vorliegende Erfindung auf diverse Vorrichtungen zu beziehen, die beispielsweise im Gleichstrom, Kreuzstrom oder Gegenstrom arbeiten.

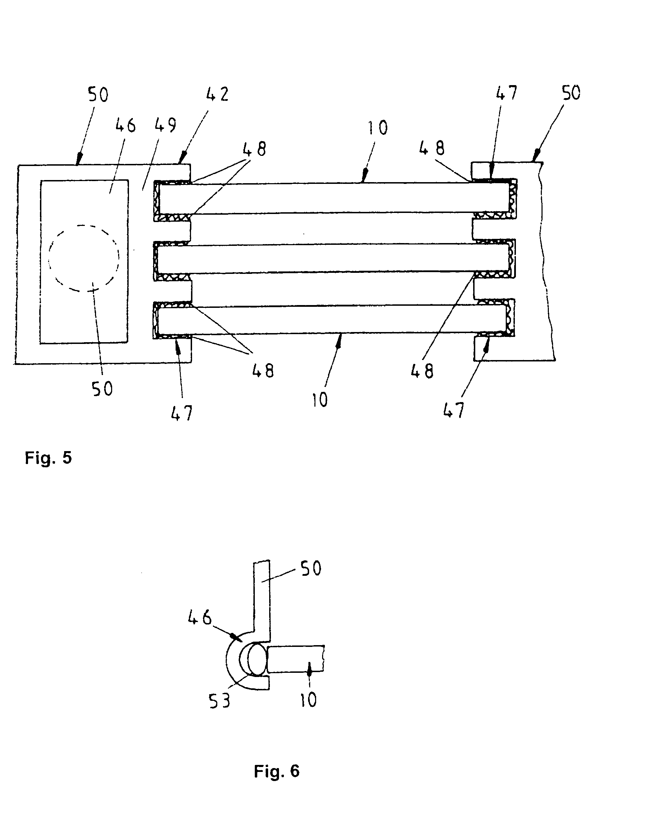

Figur 5 zeigt eine PCM-Halterung 50, die mit einem Kanal 46 ausgebildet ist, der im Querschnitt eine recheckige Form hat. In diesem Kanal 46 wird ein Fluid geführt, welches beispielsweise Wasser sein kann. An einem Ende der PCM-Halterung 50 ist ein Rohranschluss 51 angeordnet, durch diesen das Wasser in den Kanal 46 geleitet wird.

Seitlich weist die PCM-Halterung 50 Aufnahmevorrichtungen 47 auf, in denen PCM-Platten 10 gehalten werden. Bei dieser Ausführungsform sind die Aufnahmevorrichtungen 47 in ihrem Querschnitt u-förmig ausgebildet. Die PCM-Platten 10 sind zweiseitig eingespannt, wobei die Seitenkanten in den Aufnahmevorrichtungen 47 gehalten werden. Es ist jedoch ebenfalls möglich die PCM-Platten 10 in einer anderen Ausgestaltung einseitig in der Aufnahmevorrichtung 47 zu befestigen. Die PCM-Platten 10 können seitlich in die Aufnahmevorrichtungen 47 hineingeschoben werden, wodurch sich der Montageaufwand gering halten lässt.

Der Kanal 46 ist an einer Seite mit einer der Aufnahmevorrichtung 47 zugewandten Wandung 49 ausgebildet, durch diese der Wärmestrom in das Fluid geleitet wird. Da im vorliegenden Ausführungsbeispiel die Halterung 50 aus Aluminium besteht, kann eine gute Wärmeübertragung erzielt werden. Des Weiteren ist zur Erhöhung der Wärmeübertragung zwischen der jeweiligen PCM-Platte 50 und der Aufnahmevorrichtung 47 beziehungsweise der zugewandten Kanalwandung 49 eine Wärmeleitpaste 48 angeordnet.

In Figur 6 wird eine weitere Alternative einer PCM-Halterung 50 dargestellt, die einen im Querschnitt u-förmigen Kanal 46 aufweist, in dem ein elastischer Schlauch 53 geführt ist. Eine PCM-Platte 10 steht im direkten Kontakt mit dem Schlauch 53, die durch eine Anpresskraft unmittelbar die Schlauchwandung berührt. Hierbei kann der Schlauch 53 ohne weiteres ein wenig verformt werden, wodurch eine größere Kontaktfläche zwischen dem Schlauch 53 und der PCM-Platte 10 erreicht wird. Die PCM-Platte 10 liegt direkt an den beiden u-förmigen Enden des offenen Kanals 46 an, so dass der Kanal 46 in diesem Ausführungsbeispiel gleichzeitig als Aufnahmevorrichtung 47 dient.

Die Erfindung beschränkt sich nicht auf die hier dargestellten Ausführungsbeispiele. Vielmehr ist es möglich, durch Kombination und Modifikation der genannten Mittel und Merkmale weitere Ausführungsvarianten zu realisieren, ohne den Rahmen der Erfindung zu verlassen.

### BEZUGSZEICHENLISTE

- 10: PCM-Element
- 12: Umhüllung
- 14: Phasenwechselmaterial
- 16: Metallgeflecht
- 18: Aluminium-Strangpressprofil
- 20: Rohr
- 22: Rohranschluss
- 24: Gehäuse
- 26: Lufteintrittsöffnung
- 28: Luftaustrittsöffnung
- 30: Ventilator
- 40: Rohrregister
- 42: Anschlussleitung
- 43: Übertragungseinheit, Rohr
- 44: Abdeckung
- 46: Kanal
- 47: Aufnahmevorrichtung
- 48: Wärmeleitpaste
- 49: Wandung
- 50: PCM-Halterung
- 51: Rohranschluss
- 52: Bohrung
- 53: Schlauch
- L1,L2: Längsachse

## Patentansprüche

1. PCM-Element zur latenten Wärmespeicherung, **dadurch gekennzeichnet, dass** das PCM-Element (10) als Modul aufgebaut und parallel und in Reihe angeordnet mit mindestens einem weiteren PCM-Element kombinierbar ist und Phasenwechselmaterial (14) (Phase Change Material) innerhalb einer Umhüllung (12) angeordnet ist.

2. PCM-Element nach Anspruch 1, **dadurch gekennzeichnet, dass** das PCM-Element (10) die Form eines Quaders aufweist.

3. PCM-Element nach Anspruch 2, **dadurch gekennzeichnet, dass** das PCM-Element (10) mit einer Bohrung (52) ausgebildet ist, in der eine ein Fluid führende Übertragungseinheit (43) einführbar ist.

4. PCM-Element nach Anspruch 3, **dadurch gekennzeichnet, dass** die Übertragungseinheit (43) aus Metall oder Kunststoff besteht.

5. PCM-Element nach einem der Ansprüche 3 oder 4, **dadurch gekennzeichnet, dass** die Übertragungseinheit (43) eine Querschnittsfläche aufweist, die kreisförmig oder elliptisch ist oder dass die Übertragungseinheit (43) als Flachrohr ausgestaltet ist.

6. PCM-Element nach einem der vorhergehenden Ansprüche, **dadurch gekennzeichnet, dass** eine Abdeckung (44) auf dem PCM-Element (10) angeordnet ist, die aus einem wärmeleitenden Material besteht.

7. PCM-Element nach einem der vorhergehenden Ansprüche, **dadurch gekennzeichnet, dass** die Übertragungseinheit (43) als Rohr ausgebildet ist, das mit dem PCM-Element (10) im Presssitz verbunden ist.

8. PCM-Element nach einem der vorhergehenden Ansprüche, **dadurch gekennzeichnet, dass** innerhalb der Umhüllung (12) ein Geflecht und/oder ein Profil aus wärmeleitendem Material angeordnet ist.

9. PCM-Element nach Anspruch 8, **dadurch gekennzeichnet, dass** das wärmeleitende Profil ein Aluminium-Strangpressprofil (18) ist.

10. PCM-Element nach Anspruch 8, **dadurch gekennzeichnet, dass** das wärmeleitende Geflecht homogen innerhalb der Umhüllung (12) angeordnet ist.

11. PCM-Element nach einem der Ansprüche 8 bis 10, **dadurch gekennzeichnet, dass** das wärmeleitende Material ein Metall ist.

12. PCM-Element nach einem der Ansprüche 1 bis 11, **dadurch gekennzeichnet, dass** die Umhüllung (12) aus Material mit sehr hoher Wärmeleitung besteht, wobei die Umhüllung (12) bevorzugter Weise als ggf. mehrschichtige Folie ausgebildet ist.

13. PCM-Element nach einem der Ansprüche 1 bis 12, **dadurch gekennzeichnet, dass** die Umhüllung (12) aus einem mindestens zweischichtigem, bevorzugter Weise mehrschichtigem Material besteht, wobei eine Schicht aus einem hochelastischen Material und mindestens eine weitere Schicht aus einem flammfesten oder nicht-brennbaren Material besteht.

14. PCM-Element nach Anspruch 13, **dadurch gekennzeichnet, dass** innerhalb des PCM-Elements (10) ein Rohr (20) angeordnet ist und dass bevorzugter Weise die Längsachse (L2) des PCM-Elements (10) mit der Längsachse (L1) des Rohres (20) identisch ist.

15. PCM-Element nach einem der Ansprüche 1 bis **14, dadurch gekennzeichnet, dass** das PCM-Element eine lang gestreckte zylindrische Form aufweist.

16. PCM-Element nach einem der Ansprüche 1 bis 15, **dadurch gekennzeichnet, dass** das PCM-Element einen ovalen oder polygonen Querschnitt aufweist.

17. PCM-Element nach einem der Ansprüche 1 bis 16, **dadurch gekennzeichnet, dass** das Phasenwechselmaterial (14) ein Salz, ein Salzhydrat, ein Gemisch von Salzen und/oder Salzhydraten und/oder ein organisches Material ist.

18. PCM-Element nach einem der Ansprüche 1 bis 17, **dadurch gekennzeichnet, dass** das organische Material Paraffin ist und das Gemisch Magnesium- und Lithiumnitrat aufweist.

19. PCM-Halterung (50) für ein PCM-Element (10) nach einem der Ansprüche 1 bis 18, **dadurch gekennzeichnet, dass** die PCM-Halterung (50) einen Kanal (46) in dem ein Fluid führbar ist, und mindestens eine Aufnahmevorrichtung (47) aufweist, in die das PCM-Element zumindest teilweise einführbar ist.
